# EUROPEAN PATENT SPECIFICATION

(11) **EP 4 494 987 B1**
(45) Date of publication and mention of the grant of the patent: **24.12.2025**
(21) Application number: 24183334.2
(22) Date of filing: 20.06.2024
(51) Int. Cl.: B62J 45/20, B62L 3/00, B62M 7/02, B60T 1/06, B60W 30/18, B60T 8/32, B60T 8/17, B60T 8/175, B60T 7/04, B60T 7/12, B60T 7/08, F16D 65/02

(54) **STRADDLED VEHICLE**
GRÄTSCHSITZFAHRZEUG
VÉHICULE À SELLE

(30) Priority: 21.07.2023 JP 2023119031
(43) Date of publication of application: 22.01.2025
(73) Proprietor: Yamaha Hatsudoki Kabushiki Kaisha, Iwata-shi, Shizuoka-ken 438-8501 (JP)
(72) Inventor: KAWABATA, Tomohiro, Iwata, 438-8501 (JP)
(74) Representative: Studio Torta S.p.A.

(56) References cited:
- JP-A- S60 226 381
- JP-A- S62 265 089
- US-A1- 2016 009 275

## Description

### Technical Field

The present invention relates to a straddled vehicle that travels while a rider sits astride the vehicle.

### Prior Art

The currently-used straddled vehicle of this type includes a brake mechanism operated by the rider for decelerating the straddled vehicle. The brake mechanism is provided on a center portion of a rear wheel, for example. With this construction, the rear wheel moves upward and downward together with the brake mechanism, leading to increased unsprung load. Then, such is proposed that the brake mechanism is not provided on the rear wheel and is arranged on a drive shaft of an engine (see, for example, Patent Literature 1).

[Patent Literature 1]
Japanese Unexamined Patent Publication No. S60-154972

However, the example of the currently-used apparatus with such a construction has the following drawback. Specifically, the engine typically includes a crankshaft and a weight. The crankshaft outputs a driving force. The driving force is transmitted from the crankshaft of the engine to the rear wheel via the drive shaft. The weight is, for example, a flywheel. The weight applies an inertia force to the crankshaft. The weight relieves change in driving force. The weight relieves change in number of rotations of the crankshaft. The number of rotations of the crankshaft corresponds to the number of rotations of the engine.

The weight resists increase in driving force, for example. The weight resists increase in number of rotations of the engine, for example. Accordingly, idling of the rear wheel is suppressible even when the rider opens an accelerator rapidly. As a result, the straddled vehicle accelerates appropriately. It is easy for the rider to operate the accelerator.

The weight also resists decrease in driving force, for example. The weight also resists decrease in number of rotations of the engine, for example. Accordingly, the number of rotations of the engine does not decrease rapidly even when the rider operates the brake mechanism while the rider completely closes the accelerator. As a result, a drawback is present that the straddled vehicle is hard to decelerate appropriately.

Then, it is considered to modify the engine by omitting the weight or reducing the weight. The modified engine in this manner can lead to overcoming of the drawback concerning deceleration, whereas they may lead to another type of drawback. That is, the straddled vehicle is hard to accelerate appropriately. With the modified engine in this manner, the rear wheel may cause idling when the straddled vehicle accelerates. With the modified engine in this manner, careful handling of the accelerator is required during acceleration.

US2016/009275A1 discloses a straddled vehicle according to the preamble of claim 1.

The present invention has been made regarding the state of the art noted above, and its first object is to provide a straddled vehicle that accelerates appropriately.

A second object of the present invention is to provide a straddled vehicle that decelerates appropriately.

### Description of the invention

The present invention, which is set out in the appended set of claims, is constituted as stated below to achieve the above objects.

(1) Provided is a straddled vehicle is provided including an engine having a crankshaft configured to output a driving force and a drive shaft configured to rotate with the crankshaft, a rear wheel configured to rotate with the drive shaft, an accelerator configured to be operated by an rider for accelerating the straddled vehicle, a brake mechanism configured to be operated by the rider for decelerating the straddled vehicle, a driving force damping mechanism configured to apply a damping force for damping the driving force transmitted in a transmission path from the crankshaft to the rear wheel, a detector configured to detect at least either a first motion for accelerating the straddled vehicle or a second motion for decelerating the straddled vehicle, and a controller configured to actuate the driving force damping mechanism when the detector detects at least either the first motion or the second motion.

When the detector detects at least either the first motion or the second motion, the controller actuates the driving force damping mechanism. Accordingly, the driving force transmitted from the engine to the rear wheel is damped. Accordingly, rapid change in the driving force transmitted from the engine to the rear wheel during acceleration is relieved. As a result, the straddled vehicle accelerates appropriately. Moreover, the straddled vehicle decelerates appropriately if there is resistance to reduction in number of rotations of the engine during deceleration.

(2) It is preferred that the controller does not actuate the driving force damping mechanism when a transmission ratio in the transmission of the engine is lower than a predetermined transmission ratio even when the detector detects the first motion.

When the transmission ratio is low, change in the driving force transmitted from the engine to the rear wheel is small in the first motion. Accordingly, no actuation of the driving force damping mechanism allows the rider to perform the first motion in a natural sense.

(3) It is preferred that the driving force damping mechanism does not operate when an amount of change in degree of opening of the accelerator per time is smaller than a predetermined value even when the detector detect the first action.

When a speed is gradually accelerated while the accelerator is opened slowly, change per time in the driving force transmitted from the engine to the rear wheel is small in the first motion. Accordingly, no actuation of the driving force damping mechanism allows the rider to perform the first motion in a natural sense.

(4) It is preferred that the controller does not actuate the driving force damping mechanism when a rate of increase in number of rotations of the engine is equal to or less than a predetermined value even when the detector detects the first motion.

When the rate of increase in number of rotations of the engine is equal to or less than a predetermined value, an amount of change per time in the driving force transmitted from the engine to the rear wheel is small in the first motion. Accordingly, no actuation of the driving force damping mechanism allows the rider to perform the first motion in a natural sense.

(5) It is preferred that the controller does not actuate the driving force damping mechanism when an amount of operation of the brake mechanism by the rider is smaller than a predetermined value even when the detector detects the second motion.

For example, the brake mechanism may be operated weakly when the speed is kept constant under a condition where the speed gradually increases with a six-speed gear and while the accelerator is closed on a down slope. In this case, no actuation of the driving force damping mechanism allows the rider to perform the second motion in a natural sense.

(6) It is preferred that the controller does not actuate the driving force damping mechanism when the accelerator is operates so as not to decelerate even when the detector detects the second motion.

There is a case where the brake mechanism operates only on the rear wheel for adjusting a rotation diameter during a U-turn or cornering at a partial throttle in which the accelerator is operated so as not to decelerate. In this case, no actuation of the driving force damping mechanism allows the rider to perform the second motion in a natural sense.

(7) It is preferred that the detector detects upward movement of a rear part of the vehicle as the first motion.

The straddled vehicle provided with the Inertial Measurement Unit (IMU) can detect a posture change of the vehicle during acceleration. When the upward movement of the rear part of the vehicle is detected, it is defined that the first motion is detected. The upward movement of the rear part of the vehicle indicates that strong acceleration is performed to an extent where the posture of the vehicle is changed. Accordingly, the first motion can be detected certainly.

(8) It is preferred that the detector detects downward movement of a front part of the vehicle as the second motion.

The straddled vehicle provided with the Inertial Measurement Unit (IMU) can detect a posture change of the vehicle during deceleration. When the downward movement of the front part of the vehicle is detected, it is defined that the second motion is detected. The downward movement of the front part of the vehicle indicates that strong braking is performed to an extent where the posture of the vehicle is changed. Accordingly, the second motion can be detected certainly.

(9) It is preferred that the detector detects an idling action that the rear wheel runs on idle, and that the controller actuates the driving force damping mechanism when an idling action that the rear wheel runs on idle and the detector detects the idling action.

For example, a mechanism of an Anti-lock Brake System (ABS), which is often installed in the currently-used vehicle, is used as the detector. Accordingly, the idling motion of the rear wheel can be detected certainly from a rotation difference between the front and rear wheels. Therefore, the idling motion of the rear wheel can be overcome by actuating the driving force damping mechanism also when the rear wheel runs on idle. As a result, the vehicle can accelerate in a stable state.

(10) According to the invention, the straddled vehicle further includes a memory unit configured to store the damping force, and a setting unit configured to control the damping force stored in the memory unit in such a way that the damping force is adjustable by operating the setting unit by the rider.

The setting unit controls the damping force stored in the memory unit, whereby a degree of intervention of the driving force damping mechanism can be changed. Accordingly, the rider sets a desired degree of intervention, thereby making the straddled vehicle easy for riding to a rider's taste.

(11) It is preferred that, after the driving force damping mechanism actuates, the controller releases actuation of the driving force damping mechanism when at least either the first motion or the second motion is not detected.

When the actuation of the driving force damping mechanism is released, the driving force damping mechanism returns a damping force relative to a driving force to its original in a transmission path. Specifically, when the actuation of the driving force damping mechanism is released, the damping force of the driving force damping mechanism is eliminated and the driving force applied to the rear wheel is recovered. Here, the damping force of the driving force damping mechanism rapidly decreases immediately after the actuation of the driving force damping mechanism is released. Therefore, the driving force that the rear wheel receives rapidly increases immediately after the actuation of the driving force damping mechanism is released. Accordingly, compared to a traction control to adjust the driving force of the engine, time is shorter until the vehicle speed recovers after the actuation of the driving force damping mechanism is released.

(12) It is preferred that the rear wheel includes a driven sprocket configured to rotate by receiving the driving force from the drive shaft, and that the driving force damping mechanism is a driven sprocket rotation suppressing mechanism provided on the driven sprocket and configured to suppress rotation of the driven sprocket.

The driving force damping mechanism can be constructed easily with the driven sprocket rotation suppressing mechanism for suppressing the rotation of the driven sprocket. The rear wheel includes the driven sprocket. The driving force damping mechanism corresponds to the driven sprocket rotation suppressing mechanism. Accordingly, the driving force damping mechanism damps the driving force at a position near the rear wheel. Therefore, it is easy to adjust the driving force that the rear wheel receives.

(13) It is preferred that the driving force damping mechanism is a drive shaft rotation suppressing mechanism provided on the drive shaft and configured to suppress rotation of the drive shaft.

The engine includes the drive shaft. The driving force damping mechanism corresponds to the drive shaft rotation suppressing mechanism. Accordingly, the drive shaft rotation suppressing mechanism damps the driving force at a position near the engine. Therefore, the driving force can be damped certainly. Moreover, sufficient responsibility until the driving force is damped can be obtained.

(14) It is preferred that the brake mechanism includes a rear wheel brake configured to brake the rear wheel, and that the driving force damping mechanism corresponds to the rear wheel brake.

The rear wheel brake normally provided is also used as the driving force damping mechanism. As a result, the number of parts does not increase and thus a weight does not increase. Moreover, cost can be suppressed.

(15) It is preferred that the engine does not include an inertia force applying member configured to apply an inertia force to the crankshaft.

It is most effective in the engine not including the inertia force applying member applying the inertia force to the crankshaft. For example, the straddled vehicle accelerates appropriately even when the engine does not include the inertia force applying member.

With the straddled vehicle according to the present invention, when the detector detects at least either the first motion or the second motion, the controller actuates the driving force damping mechanism. Accordingly, the driving force transmitted from the engine to the rear wheel is damped. Accordingly, rapid change in the driving force transmitted from the engine to the rear wheel during acceleration is relieved. As a result, the straddled vehicle accelerates appropriately. Moreover, the straddled vehicle decelerates appropriately if there is resistance to reduction in number of rotations of the engine during deceleration.

### Brief Description of Drawings

Fig. 1 is a left side view of a straddled vehicle according to a first embodiment.
Fig. 2 is a right side view of the straddled vehicle according to the first embodiment.
Fig. 3 is a block diagram of a control system of the straddled vehicle according to the first embodiment.
Fig. 4 is a flow chart illustrating operation of the straddled vehicle according to the first embodiment.
Fig. 5 is a right side view of a straddled vehicle according to a second embodiment.

### Embodiments of the invention

The following describes embodiments of the present invention.

### First embodiment

A straddled vehicle 1 according to this invention will be described hereinafter with reference to the drawings.

### 1. Outline construction of straddled vehicle

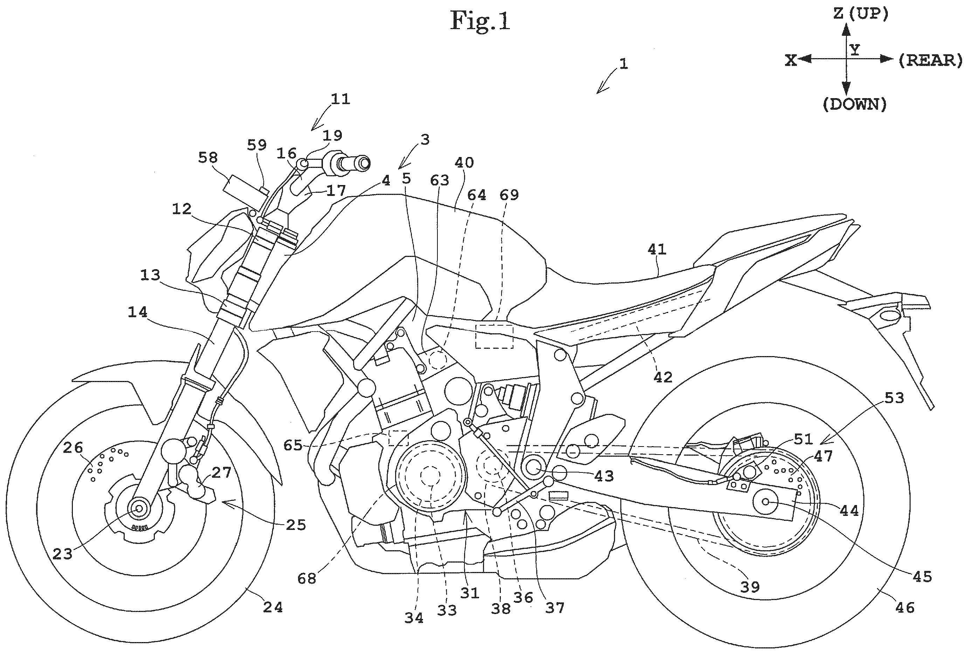

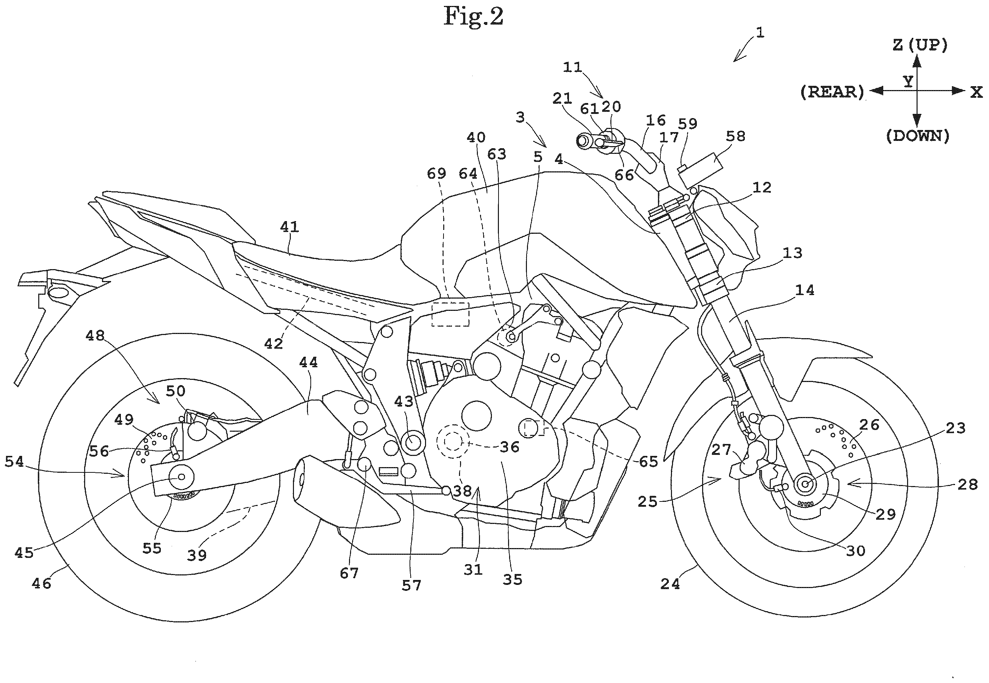

Fig. 1 is a left side view of a straddled vehicle according to the first embodiment. Fig. 2 is a right side view of the straddled vehicle according to the first embodiment.

A straddled vehicle 1 is a street type vehicle. A driver (also called rider) rides on the straddled vehicle 1, and operates the straddled vehicle 1.

Figs. 1 and 2 show a front-back direction X, a transverse direction Y, and an up-down direction Z of the straddled vehicle 1. The front-back direction X, transverse direction Y, and up-down direction Z are defined with reference to a driver riding on the straddled vehicle 1. The front-back direction X, transverse direction Y, and up-down direction Z are perpendicular to one another. The front-back direction X and transverse direction Y are horizontal. The up-down direction Z is vertical.

The terms "forward", "rearward", "upward", "downward", "rightward", and "leftward", respectively, mean "forward", "rearward", "upward", "downward", "rightward", and "leftward" as seen from the driver riding on the straddled vehicle 1. In this specification, unless otherwise specified, "forward" and "rearward" include not only directions parallel to the front-back direction X but also directions close to the front-back direction X. The directions close to the front-back direction X are directions at angles, formed by the front-back direction X, that do not exceed 45 degrees, for example. Similarly, unless otherwise specified, "rightward" and "leftward" include not only directions parallel to the transverse direction Y but also directions close to the transverse direction Y. Unless otherwise stated, "upward" and "downward" include not only directions parallel to the up-down direction Z but also directions close to the up-down direction Z. For reference, the drawings show front, rear, up, down, right, and left, as appropriate.

It is to be understood that, in this specification, various expressions describing arrangements have the following meanings, respectively. The following description will be made taking the transverse direction Y for example, and the same may apply to the front-back direction X and up-down direction Z.

The expression "Member Ma is located more rightward/leftward than Member Mb," defines a position in the transverse direction Y of Member Ma relative to Member Mb, and does not define a position in the front-back direction X or the up-down direction Z of Member Ma relative to Member Mb. In the case of this expression, Member Ma may, or may not overlap Member Mb in a side view of the straddled vehicle 1.

The expression "Member Ma is located rightward/leftward of Member Mb," without reference to a looking direction defines a position in the transverse direction Y of Member Ma relative to Member Mb, a position in the front-back direction X of Member Ma relative to Member Mb, and a position in the up-down direction Z of Member Ma relative to Member Mb. This expression means that Member Ma is located more rightward/leftward than Member Mb, and that at least part of Member Ma overlaps at least part of Member Mb in a side view of the straddled vehicle 1.

The expression "Member Ma is located rightward/leftward of Member Mb in plan view of the straddled vehicle 1," defines a position in the transverse direction Y of Member Ma relative to Member Mb, and a position in the front-back direction X of Member Ma relative to Member Mb, and does not define a position in the up-down direction Z of Member Ma relative to Member Mb. This expression means that Member Ma is located more rightward/leftward than Member Mb, that a front end of Member Ma is positioned more forward than a rear end of Member Mb, and that a rear end of Member Ma is located more rearward than a front end of Member Mb.

The expression "Member Ma is located rightward/leftward of Member Mb in front view of the straddled vehicle 1," defines a position in the transverse direction Y of Member Ma relative to Member Mb, and a position in the up-down direction Z of Member Ma relative to Member Mb, and does not define a position in the front-back direction X of Member Ma relative to Member Mb. This expression means that Member Ma is located more rightward/leftward than Member Mb, that an upper end of Member Ma is positioned higher than a lower end of Member Mb, and that a lower end of Member Ma is located lower than an upper end of Member Mb.

In the present specification, the language "in side view of the straddled vehicle 1" is referred to as "in side view of the vehicle", as appropriate. Likewise, the language "in plan view of the straddled vehicle 1" is referred to as "in plan view of the vehicle", as appropriate.

The straddled vehicle 1 has a body frame 3. The vehicle body frame 3 includes a head tube 4 and a main frame 5. The head tube 4 is disposed at the front part of the straddled vehicle 1. The main frame 5 extends rearward and downward from the head tube 4 in the plan view of the vehicle.

The straddled vehicle 1 includes a steering device 11. The steering device 11 is supported by the body frame 3. Specifically, the steering device 11 is supported by the head tube 4. The steering device 11 is rotatable relative to the body frame 3.

The steering device 11 includes a top bridge 12, a bottom bridge 13, and a front suspension 14. The top bridge 12 is located higher than the head tube 4. The bottom bridge 13 is located lower than the top bridge 12. The bottom bridge 13 is located lower than the head tube 4. The front suspension 14 is supported by the top bridge 12 and the bottom bridge 13. The front suspension 14 extends forward and downward from the top bridge 12 in the side view of the vehicle. The front suspension 14 extends to a position lower than the bottom bridge 13.

The steering device 11 includes a handlebar 16. The handlebar 16 is supported by the top bridge 12. The handlebar 16 is entirely located higher than the top bridge 12, for example. The driver grips the handlebar 16 and steers the steering device 11.

The steering device 11 includes a handle holder 17. The handle holder 17 is supported, for example, on the top bridge 12. The handle holder 17 supports the handlebar 16.

The handlebar 16 includes a clutch lever 19 on a left side in the transverse direction Y. The clutch lever 19 controls transmission of the driving force. The driver operates the clutch lever 19 to control transmission of the driving force. The handlebar 16 includes a brake lever 20 on a right side in the transverse direction Y. The brake lever 20 controls braking of the front wheel. The driver operates the brake lever 20 to decelerate the straddled vehicle 1. The handlebar 16 includes an accel grip 21 on the right side in the transverse direction Y. The accel grip 21 is also called a throttle. The driver operates the accel grip 21 to accelerate the straddled vehicle 1.

The steering device 11 includes a front axle 23. The front axle 23 is located lower than a bottom bridge 13. The front axle 23 is supported by the front suspension 14.

The straddled vehicle 1 includes a front wheel 24. The front wheel 24 is supported by the steering device 11. Specifically, the front wheel 24 is supported by the front axle 23. The front wheel 24 is rotatable about the front axle 23. The front wheel 24 includes a front wheel braking device 25. The front wheel braking device 25 has a brake disc 26 and a brake caliper 27. The brake disc 26 rotates together with the front wheel 24. The brake caliper 27 is attached to the front suspension 14. The brake caliper 27 generates a braking force by sandwiching the brake disc 26 in the transverse direction Y. In the straddled vehicle 1, the front wheel braking device 25 is located on both the right side and the left side in the transverse direction Y in the plan view of the vehicle. The front wheel braking device 25 may be located only on either the right side or the left side in the transverse direction Y. The front wheel braking device 25 can apply the braking force that is sufficient to stop rotation of the front wheel 24.

A front wheel ABS sensor 28 is provided on the right side in the transverse direction Y of the front wheel 24. The front wheel ABS sensor 28 includes a pulsar ring 29 and a pulse sensor 30. The pulsar ring 29 rotates together with the front wheel 24. The pulsar ring 29 has a plurality of slits formed on the entire periphery thereof. The plurality of slits is formed radially around the front axle 23 in side view of the vehicle. The pulse sensor 30 is fixed to the front suspension 14. The pulse sensor 30 detects a pulse generated along with rotation of the pulsar ring 29.

The straddled vehicle 1 includes an engine 31. The engine 31 is supported by the body frame 3. Specifically, the engine 31 is supported by the main frame 5. The engine 31 is fixed to the body frame 3. The engine 31 does not swing relative to the vehicle body frame 3. The engine 31 generates a driving force for traveling the straddled vehicle 1.

At least part of the engine 31 is located below the main frame 5 in side view of the vehicle. The engine 31 is located rearward of the steering device 11 in the side view of the vehicle.

The engine 31 includes a crankshaft 33, a flywheel 34, a transmission 35, and a drive shaft 36. The crankshaft 33 outputs driving force. The flywheel 34 applies an inertia force to the crankshaft 33. The flywheel 34 suppresses rapid rotation variation of the crankshaft 33. The flywheel 34 makes the crankshaft 33 rotate smoothly. The transmission 35 performs deceleration. The transmission 35 performs deceleration by a plurality of speeds, thereby reducing a number of rotations of the crankshaft 33. The transmission 35 can switch to a plurality of transmission ratios. The driving force shifted by the transmission 35 is transmitted to the drive shaft 36. The engine 31 includes a shift pedal 37 on the left side in the transverse direction Y. The shift pedal 37 is operated by a left leg of the driver. The shift pedal 37 controls the transmission ratio of the transmission 35.

The drive shaft 36 includes a drive sprocket 38. The drive sprocket 38 is coaxial with the drive shaft 36. The drive sprocket 38 has a wheel formed on its outer periphery. The drive sprocket 38 rotates together with the drive shaft 36. A chain 39 is suspended over the drive sprocket 38.

The straddled vehicle 1 includes a fuel tank 40. The fuel tank 40 is supported by the body frame 3. Specifically, the fuel tank 40 is supported by the main frame 5. The fuel tank 40 stores a fuel.

At least part of the fuel tank 40 is located above the main frame 5 in side view of the vehicle. The fuel tank 40 is located rearward of the steering device 11 in side view of the vehicle. The fuel tank 40 is located above the engine 31 in side view of the vehicle.

The straddled vehicle 1 includes a seat 41. The seat 41 is supported by the body frame 3. Specifically, the seat 41 is supported by a seat frame 42 of the body frame 3. The seat frame 42 extends rearward X of the body frame 3. The seat frame 42 is inclined toward above the rearward X in the side view of the vehicle. The seat frame 42 is attached to the main frame 5.

The seat 41 is located more rearward and higher than the engine 31. The seat 41 is located rearward of the fuel tank 40 in the side view of the vehicle. At least part of the seat 41 is located at a height position equal in level to the fuel tank 40.

The straddled vehicle 1 includes a pivot shaft 43, a swing arm 44, a rear axle 45, and a rear wheel 46. The pivot shaft 43 is supported by the body frame 3. Specifically, the pivot shaft 43 is supported by the main frame 5. The swing arm 44 is supported by the pivot shaft 43. The swing arm 44 is swingable about the pivot shaft 43 relative to the body frame 3. The swing arm 44 extends rearward from the pivot shaft 43 in the side view of the vehicle. The rear axle 45 is supported by a rear part of the swing arm 44. The rear wheel 46 is supported by the rear axle 45. The rear wheel 46 is rotatable about the rear axle 45. The swing arm 44 and the rear wheel 46 are located rearward of the engine 31 the side view of the vehicle. The swing arm 44 and the rear wheel 46 are located lower than the fuel tank 40 and the seat 41.

The rear wheel 46 includes a driven sprocket 47 on the left side in the transverse direction Y. The rear wheel 46 includes a rear wheel braking device 48 on the right side in the transverse direction Y. The rear wheel braking device 48 has a brake disc 49 and a brake caliper 50. The driven sprocket 47 and the brake disc 49 rotate together with the rear wheel 46. The brake caliper 50 is attached to the swing arm 44. The brake caliper 50 generates a braking force by sandwiching the brake disc 49 in the transverse direction Y. The rear wheel braking device 48 can apply the braking force, that is sufficient to stop rotation of the rear wheel 46, to the brake disc 49.

The driven sprocket 47 includes a disc and a gear formed on an outer periphery edge of the disc. The disc is located inward of the gear. The chain 39 is suspended over the gear on the outer periphery edge of the driven sprocket 47. The chain 39 transmits a driving force from the drive shaft 36 and the drive sprocket 38 of the engine 31 to the rear wheel 46. The rear wheel 46 rotates around the rear axle 45 by the driving force transmitted from the chain 39. That is, the rear wheel 46 rotates by the drive shaft 36.

The swing arm 44 includes a caliper 51 on the left side in the transverse direction Y. The caliper 51 is located on the swing arm 44. The caliper 51 applies a damping force for damping the driving force by sandwiching the disc of the driven sprocket 47. The driven sprocket 47 is made to have a large coefficient of friction of the disc between the gear on an outer periphery of the disc and the rear axle 45. The caliper 51 supplies the damping force between the gear on the outer periphery edge of the disc to the rear axle 45. The driven sprocket 47 and the caliper 51 form a driving force damping mechanism 53.

The driving force damping mechanism 53 applies a damping force smaller than the braking force applied by the rear wheel braking device 48. The driving force damping mechanism 53 does not apply enough force to stop rotation of the rear wheel 46 in a short time. The driving force damping mechanism 53 suppresses rapid increase in number of rotations of the rear wheel 46 during acceleration motion. The driving force damping mechanism 53 suppresses hard decrease in number of rotations of the rear wheel 46 by the engine 31 during a deceleration motion. In other words, the driving force damping mechanism 53 assists in reducing the number of rotations of the rear wheel 46 during a deceleration motion.

A rear wheel ABS sensor 54 is provided on the right side in the transverse direction Y of the rear wheel 46. The rear wheel ABS sensor 54 includes a pulsar ring 55 and a pulse sensor 56. The pulsar ring 55 rotates together with the rear wheel 46. The pulsar ring 55 has a plurality of slits formed on the entire periphery thereof. The plurality of slits is formed radially around the rear axle 45 in side view of the vehicle. The pulse sensor 56 is fixed to the swing arm 44. The pulse sensor 56 detects a pulse generated along with rotation of the pulsar ring 55.

The straddled vehicle 1 includes a brake pedal 57 on the right side in the transverse direction Y. The brake pedal 57 is operated by a right leg of the driver. The rear wheel braking device 48 is operated with the brake pedal 57. The driver operates the brake pedal 57 to decelerate the straddled vehicle 1.

The straddled vehicle 1 includes a meter 58. The meter 58 is supported by the steering device 11. The meter 58 is located forward of the steering device 11 in side view of the vehicle. The meter 58 is also called an instrument. The meter 58 indicates information on the straddled vehicle 1. The information on the straddled vehicle 1 includes at least either a speed of the straddled vehicle 1 or a number of rotations of the engine 31, for example. The meter 58 can indicate a "damping force" mentioned later.

The meter 58 includes a setting unit 59. The setting unit 59 is operated by the driver. The setting unit 59 indicates information, desired by the driver, on the meter 58. The setting unit 59 can change the information indicated on the meter 58. The setting unit 59 can store the changed information.

The accel grip 21 includes an accel opening degree sensor 61. The accel opening degree sensor 61 detects a degree of opening of the accel grip 21. A fuel supply device 63 is located rearward of the engine 31 in the front-back direction X. The fuel supply device 63 supplies a fuel within the fuel tank 40 to the engine 31. The fuel supply device 63 includes a throttle-valve opening degree sensor 64. The throttle-valve opening degree sensor 64 detects a degree of opening of the throttle valve for adjusting a supply amount of the fuel. The degree of opening of the throttle valve is proportional to the driving force output from the engine 31.

The engine 31 includes a gear position sensor 65 for detecting a gear position of the transmission 35. The gear position sensor 65 detects information concerning the transmission ratio of the transmission 35. The handlebar 16 includes a front braking detector 66 on the right side in the transverse direction Y. The front braking detector 66 detects that the brake lever 20 is operated. The front braking detector 66 detects that the driver performs braking. The brake pedal 57 includes a rear braking detector 67. The rear braking detector 67 detects that the brake pedal 57 is operated. The rear braking detector 67 detects that the driver performs braking. The front braking detector 66 and the rear braking detector 67 are formed by a limit switch, for example.

The engine 31 includes a crankshaft position sensor 68 on the left side in the transverse direction Y. The crankshaft position sensor 68 detects an angle of the crankshaft 33 and the number of rotations of the engine 31. The crankshaft position sensor 68 detects a phase of the crankshaft. The crankshaft position sensor 68 includes a pickup rotor, not shown. The pickup rotor is attached to and rotated together with the crankshaft 33. The crankshaft position sensor 68 includes a pickup coil, not shown. The pickup coil detects a position of the pickup rotor, not shown.

The straddled vehicle 1 includes an electronic unit 69 on a middle part in the front-back direction X. The electronic unit 69 includes an ECU 70, a memory unit 71, and an IMU 72.

### 2. Control system of straddled vehicle 1

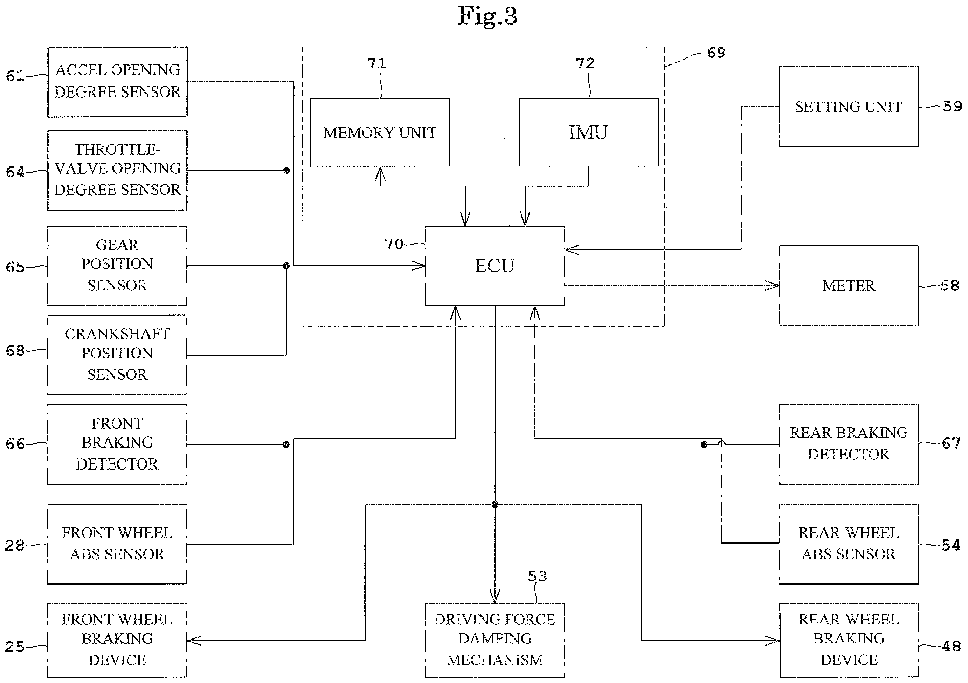

Reference is now made to Fig. 3. Fig. 3 is a block diagram of a control system of the straddled vehicle according to the first embodiment.

The ECU 70 includes a central processing unit (CPU). The ECU 70 performs control of entire elements of the straddled vehicle 1 including the engine 31. The memory unit 71 stores control program of the ECU 70, a damping force, an operation condition, an exclusion condition, and the like, which are to be mentioned later. The memory unit 71 can be rewritten. The damping force is force by which the driving force transmitted from the engine 31 is reduced. The ECU 70 operates the driving force damping mechanism 53 in accordance with the damping force stored in the memory unit 71. The damping force stored in the memory unit 71 is changeable by the setting unit 59. The damping force is adjustable by operating the setting unit 59 as desired by the driver. The damping force can be cancelled through the setting unit 59.

The driving force damping mechanism 53 is operated by only the ECU 70. The driving force damping mechanism 53 is not operated by the driver.

The IMU 72 is also called an inertial measurement unit. The IMU 72 detects three-dimensional inertial movement (translational and rotational motion in three orthogonal axes). The IMU 72 can detect a posture of the straddled vehicle 1. The IMU 72 detects an angle of the straddled vehicle 1 around an axis in the transverse direction Y (called a pitch), i.e., inclination in the front-back direction X. The IMU 72 detects an angle of the straddled vehicle 1 around an axis in the front-back direction X (called roll), i.e., inclination in the transverse direction Y. The IMU 72 detects an angle of the straddled vehicle 1 around an axis in the up-down direction Z (called yaw). That is, the ECU 70 can detect a posture of the straddled vehicle 1 via the IMU 72. The ECU 70 can detect upward movement of the rear part of the straddled vehicle 1 via the IMU 72. The ECU 70 can detect downward movement of the front part of the straddled vehicle 1 via the IMU 72.

The ECU 70 can determine whether the driver tries to accelerate or decelerate the straddled vehicle 1 with the accel opening degree sensor 61, a throttle-valve opening degree sensor 64, the front braking detector 66, the front wheel braking device 25, the front wheel ABS sensor 28, the rear braking detector 67, the rear wheel ABS sensor 54, the rear wheel braking device 48, the crankshaft position sensor 68, and the IMU 72. Likewise, the ECU 70 can also determine that the driver does not try to accelerate nor decelerate the straddled vehicle 1. The ECU 70 can detect that the rear wheel 46 runs on idle. Specifically, the ECU 70 can detect idle of the rear wheel 46 by the front wheel ABS sensor 28 and the rear wheel ABS sensor 54. Moreover, the ECU 70 can detect that the rear wheel 46 runs on idle from a vehicle speed based on the number of rotations of the front wheel 24 determined by the front wheel ABS sensor 28, an appropriate number of rotations of the rear wheel 46 in accordance with the vehicle speed, and a difference from the number of rotations of the rear wheel 46 determined by the rear wheel ABS sensor 54. The ECU 70 can detect idling motion of the rear wheel 46.

The ECU 70 can detect a condition of the transmission 35 with the gear position sensor 65. The ECU 70 can detect what number of the gear speed the transmission 35 has with the gear position sensor 65. The ECU 70 can detect a transmission ratio of the transmission 35.

The ECU 70 can detect an operation amount of the accel grip 21 with the accel opening degree sensor 61. The ECU 70 can detect acceleration operation by the driver. The ECU 70 can detect deceleration operation by the driver. The ECU 70 can detect an amount of change in degree of opening of the accel grip 21. The ECU 70 can detect that the driver keeps a constant speed without acceleration or deceleration.

The ECU 70 detects an angle of the crankshaft 33 and a number of rotations of the engine 31 by the crankshaft position sensor 68. The ECU 70 can determine a rate of increase in number of rotations of the engine 31.

The ECU 70 can determine an operational status of the front wheel braking device 25 by the front braking detector 66. The ECU 70 can detect an operation amount of the front wheel braking device 25 by the front braking detector 66 and the front wheel ABS sensor 28. The ECU 70 can determine an operation amount of the front wheel braking device 25 in accordance with a signal variation from the front wheel ABS sensor 28 after the front braking detector 66 actuates.

The ECU 70 can determine an operational status of the rear wheel braking device 48 by the rear braking detector 67. The ECU 70 can detect an operation amount of the rear wheel braking device 48 by the rear braking detector 67 and the rear wheel ABS sensor 54. The ECU 70 can determine an operation amount of the rear wheel braking device 48 in accordance with a signal variation from the rear wheel ABS sensor 54 after the rear braking detector 67 actuates.

The memory unit 71 stores in advance at least the damping force, the actuation condition, and the exclusion condition.

The damping force is force that the driving force damping mechanism 53 applies in the transmission path between the crankshaft 33 and the rear wheel 46 for damping the driving force. The driving force damping mechanism 53 weakens the driving force transmitted to the rear wheel 46. The driving force damping mechanism 53 suppresses rotation of the rear wheel 46. The driving force damping mechanism 53 applies force resistant to the driving force that the engine 31 applies to the rear wheel 46.

Here, the driving force damping mechanism 53 does not decrease the braking force of the front wheel braking device 25. The driving force damping mechanism 53 damps the driving force in the transmission path without weakening the braking force of the front wheel braking device 25. The driving force damping mechanism 53 does not decrease the braking force of the rear wheel braking device 48. The driving force damping mechanism 53 damps the driving force in the transmission path without weakening the braking force of the rear wheel braking device 48. The driving force damping mechanism 53 has a function different from that of a typical ABS system.

### 3. Actuation condition

The actuation condition is a condition where the ECU 70 actuates the driving force damping mechanism 53.

Specifically, examples of the actuation condition include detection of at least one selected from an acceleration motion, a deceleration motion, and an idling motion. When it is determined that at least one selected from the motions as above is detected and thus the actuation condition is satisfied, the ECU 70 basically actuates the driving force damping mechanism 53.

The actuation condition contains the followings, for example.

### 3-1. Acceleration motion

The acceleration motion is a motion for accelerating the straddled vehicle 1. When the acceleration motion is detected, the straddled vehicle 1 may already have accelerated. However, the acceleration motion does not mean that the straddled vehicle 1 has actually accelerated. For example, when the acceleration motion is detected, the straddled vehicle 1 may have not accelerated yet. In other words, the acceleration motion may be detected while the straddled vehicle 1 accelerates. For example, the acceleration motion may be detected before the straddled vehicle 1 accelerates.

The acceleration motion is a motion that the accel grip 21 is twisted in a direction to be fully-opened. The acceleration motion is a motion that the accel grip 21 is twisted rearward in the front-back direction X. The ECU 70 can determine an operation amount and an operation direction of the accel grip 21 by an accel opening degree sensor 61. When the accel grip 21 is twisted rearward in the front-back direction X, the ECU 70 can detect the acceleration motion by the accel opening degree sensor 61. The ECU 70 can detect a motion to accelerate, but still not in acceleration, and an actual accelerating motion.

The acceleration motion is also a motion where the degree of opening of the throttle valve of the fuel supply device 63 increases. This motion can be detected by an increase of an output value of the throttle-valve opening degree sensor 64. The output value of the throttle-valve opening degree sensor 64 is linked with the operation amount of the accel grip 21. The ECU 70 detects the acceleration motion from the output value of the throttle-valve opening degree sensor 64. The ECU 70 can detect a motion to accelerate, but still not in acceleration, and an actual accelerating motion.

The acceleration motion is a motion that the rear part of the straddled vehicle 1 moves upward. The seat frame 42 of the straddled vehicle 1 moves upward in the up-down direction Z along with the acceleration motion. The ECU 70 can detect the motion with the IMU 72. The ECU 70 can detect an actual accelerating motion with the IMU 72.

When at least any of the acceleration motions described above is detected, the ECU 70 determines that the straddled vehicle 1 is in an accelerated status.

### 3-2. Deceleration motion

The deceleration motion is a motion for decelerating the straddled vehicle 1. When the deceleration motion is detected, the straddled vehicle 1 may already have decelerated. However, the deceleration motion does not mean that the straddled vehicle 1 has actually decelerated. For example, when the deceleration motion is detected, the straddled vehicle 1 may have not decelerated yet. In other words, the deceleration motion may be detected while the straddled vehicle 1 decelerates. For example, the deceleration motion may be detected before the straddled vehicle 1 decelerates.

The deceleration motion is a motion that the driver twists the accel grip 21 in a direction to be fully-closed. The deceleration motion is a motion that the accel grip is twisted forward in the front-back direction X. The ECU 70 can determine an operation amount and an operation direction of the accel grip 21 by an accel opening degree sensor 61. When the accel grip 21 is twisted forward in the front-back direction X, the ECU 70 can detect the deceleration motion by the accel opening degree sensor 61. The ECU 70 can detect a motion to decelerate, but still not in deceleration, and an actual decelerating motion.

The deceleration motion is also a motion where the degree of opening of the throttle valve of the fuel supply device 63 decreases. This motion can be detected by a decrease of an output value of the throttle-valve opening degree sensor 64. The output value of the throttle-valve opening degree sensor 64 is linked with the operation amount of the accel grip 21. The ECU 70 detects the deceleration motion from the output value of the throttle-valve opening degree sensor 64. The ECU 70 can detect a motion to decelerate, but still not in deceleration, and an actual decelerating motion.

The deceleration motion is a motion that the driver operates the brake lever 20. The deceleration motion is a motion that the driver pulls the brake lever 20 rearward in the front-back direction X. The deceleration motion is a motion that the front braking detector 66 operates. The ECU 70 can detect a motion to decelerate, but still not in deceleration, and an actual decelerating motion.

The deceleration motion is a motion that the driver presses the brake pedal 57. The deceleration motion is a motion that the driver presses the brake pedal 57. The deceleration motion is a motion that the driver pushes the brake pedal 57 downward in the up-down direction Z. The deceleration motion is a motion that the rear braking detector 67 operates. The ECU 70 can detect a motion to decelerate, but still not in deceleration, and an actual decelerating motion.

The deceleration motion is a motion that the front part of the straddled vehicle 1 is moved downward. The front part of the straddled vehicle 1 moves downward in the up-down direction Z along with the deceleration motion. The ECU 70 can detect the motion with the IMU 72. The ECU 70 can detect an actual decelerating motion with the IMU 72.

When at least any of the deceleration motions described above is detected, the ECU 70 determines that the straddled vehicle 1 is in a decelerated status.

### 3-3. Idling motion

The idling motion is a motion that the rear wheel 46 runs on idle. For example, the rear wheel 46 runs on idle when the rear wheel 46 releases gripping of the traveling surface. The term "the rear wheel 46 runs on idle" also be replaced with "the rear wheel 46 slips."

The idling motion is a motion that a number of rotations of the rear wheel 46 is larger than a normal number of rotations of the rear wheel 46 at the vehicle speed of the straddled vehicle 1. The idling motion is a motion that a number of rotations of the rear wheel 46 is larger than a number of rotations of the front wheel 24. The ECU 70 can determine a difference in number of rotations between the front wheel 24 and the rear wheel 46 by the front wheel ABS sensor 28 and the rear wheel ABS sensor 54. The ECU 70 can detect that the rear wheel 46 runs on idle by determining the difference in number of rotations. The ECU 70 can detect that the rear wheel 46 runs on idle from a vehicle speed obtained from the number of rotations of the front wheel 24 and a difference between an appropriate number of rotations of the rear wheel 46 in accordance with this vehicle speed and the actual number of rotations of the rear wheel 46.

### 4. Exclusion condition

The exclusion condition is a condition where the driving force damping mechanism 53 does not actuate even if the actuation conditions described above are satisfied. The exclusion condition contains the followings, for example.

The exclusion condition is a condition where the driving force damping mechanism 53 does not actuate even when the ECU 70 detects the acceleration motion, the deceleration motion, or the idling motion. That is, when the exclusion condition is satisfied, the ECU 70 does not actuate the driving force damping mechanism 53 even if the actuation conditions are satisfied.

As for the exclusion condition, there is a case where a transmission ratio of the transmission 35 is smaller than a predetermined transmission ratio, for example. Specifically, the exclusion condition corresponds to a gear position concerning the transmission ratio of the transmission 35. For example, in a case where the gear of the transmission 35 has a transmission ratio lower than the two speed-gear like a three-speed gear, a four-speed gear, a five-speed gear, and a six-speed gear, the ECU 70 does not damp the driving force since the exclusion condition is satisfied even if the acceleration motion is detected and the actuation condition is satisfied. The driving force damping mechanism 53 does not actuate when the transmission ratio is lower than the predetermined transmission ratio even if the acceleration motion is detected. In other words, the driving force damping mechanism 53 actuates when the acceleration motion is detected and the transmission ratio is equal to or higher than the transmission ratio of a two speed gear (e.g., one-speed gear and two-speed gear).

When the transmission ratio is low, change in the driving force transmitted from the engine 31 to the rear wheel 46 is small in the acceleration motion. Accordingly, no actuation of the driving force damping mechanism 53 allows the driver to perform the acceleration motion in a natural sense.

As for the exclusion condition, there is a case where change per time in operation amount of the accel grip 21 is equal to or less than a predetermined value, for example. Specifically, the exclusion condition corresponds to an amount of change per time in output value from the accel opening degree sensor 61. For example, the exclusion condition is satisfied when the amount of change per time in output value from the accel opening degree sensor 61 is smaller than the predetermined value even if the accel grip 21 is operated and the acceleration motion is detected, and thus the actuation condition is satisfied. Accordingly, the ECU 70 does not actuate the driving force damping mechanism 53. In other words, the driving force damping mechanism 53 actuates when the acceleration motion is detected and the amount of change per time in output value from the accel opening degree sensor 61 is larger than the predetermined value.

When the accel grip 21 is twisted toward a direction to gradually accelerate and the vehicle speed slowly increases, the amount of change per time in the driving force transmitted from the engine 31 to the rear wheel 46 is small in the acceleration motion. Accordingly, no actuation of the driving force damping mechanism 53 allows the driver to perform the acceleration motion in a natural sense.

Instead of the accel opening degree sensor 61, the actuation condition and the exclusion condition may be determined from the amount of change per time in output value from the throttle-valve opening degree sensor 64.

As for the exclusion condition, there is a case where a rate of increase in number of rotations of the engine 31 is equal to or less than a predetermined value, for example. Specifically, the case is that the rate of increase in number of rotations of the engine 31 detected by the crankshaft position sensor 68 is equal to or less than the predetermined value. When the acceleration motion is detected, the exclusion condition is satisfied when the rate of increase in number of rotations of the engine 31 detected by the crankshaft position sensor 68 is equal to or less than the predetermined value. Accordingly, the ECU 70 does not actuate the driving force damping mechanism 53. In other words, when the acceleration motion is detected and the rate of increase in number of rotations of the engine 31 detected by the crankshaft position sensor 68 is larger than the predetermined value, the ECU 70 actuates the driving force damping mechanism 53.

When the rate of increase in number of rotations of the engine 31 is equal to or less than a predetermined value, change per time in the driving force transmitted from the engine 31 to the rear wheel 46 is small in the acceleration motion. Accordingly, no actuation of the driving force damping mechanism 53 allows the driver to perform the acceleration motion in a natural sense.

As for the exclusion condition, there is a case where an operation amount of the front wheel braking device 25 is smaller than a predetermined value, for example. Specifically, the ECU 70 can determine an operation amount of the front wheel braking device 25 by the front braking detector 66 and the front wheel ABS sensor 28. When the operation amount of the front wheel braking device 25 is smaller than the predetermined value, the ECU 70 does not actuate the driving force damping mechanism 53 even if the deceleration motion is detected and the actuation condition is satisfied. In other words, the ECU 70 actuates the driving force damping mechanism 53 when the deceleration motion is detected and the operation amount of the front wheel braking device 25 is equal to or larger than the predetermined value.

As for the exclusion condition, there is a case where an operation amount of the rear wheel braking device 48 is smaller than a predetermined value, for example. Specifically, the ECU 70 can determine an operation amount of the rear wheel braking device 48 by the rear braking detector 67 and the rear wheel ABS sensor 54. When the operation amount of the rear wheel braking device 48 is smaller than the predetermined value, the ECU 70 does not actuate the driving force damping mechanism 53 even if the deceleration motion is detected and the actuation condition is satisfied. In other words, the ECU 70 actuates the driving force damping mechanism 53 when the deceleration motion is detected and the operation amount of the rear wheel braking device 48 is equal to or larger than the predetermined value.

For example, the front wheel braking device 25 and the rear wheel braking device 48 may be operated weakly when the speed is kept constant under a condition where the speed gradually increases with a six-speed gear and while the accel grip 21 is closed on a down slope. In this case, no actuation of the driving force damping mechanism 53 allows the driver to perform the deceleration motion in a natural sense.

As for the exclusion condition, there is a case where the accel grip 21 is operated not to decelerate while the deceleration motion is detected, for example. The case where the accel grip 21 is operated not to decelerate is a state where the accel grip 21 is not completely opened or closed, and is fixed to any intermediate position, for example. This is called a partial throttle. When the accel grip 21 is operated not to decelerate, the ECU 70 does not actuate the driving force damping mechanism 53 even if the deceleration motion is detected and the actuation condition is satisfied. In other words, the ECU 70 actuates the driving force damping mechanism 53 when the deceleration motion is detected and the accel grip 21 is operated to decelerate.

There is a case where only the rear wheel braking device 48 actuates for adjusting a rotation diameter during a U-turn or cornering at a partial throttle in which the accel grip 21 is operated so as not to decelerate. In this case, no actuation of the driving force damping mechanism 53 allows the driver to perform the deceleration motion in a natural sense.

### 5. Details of motion

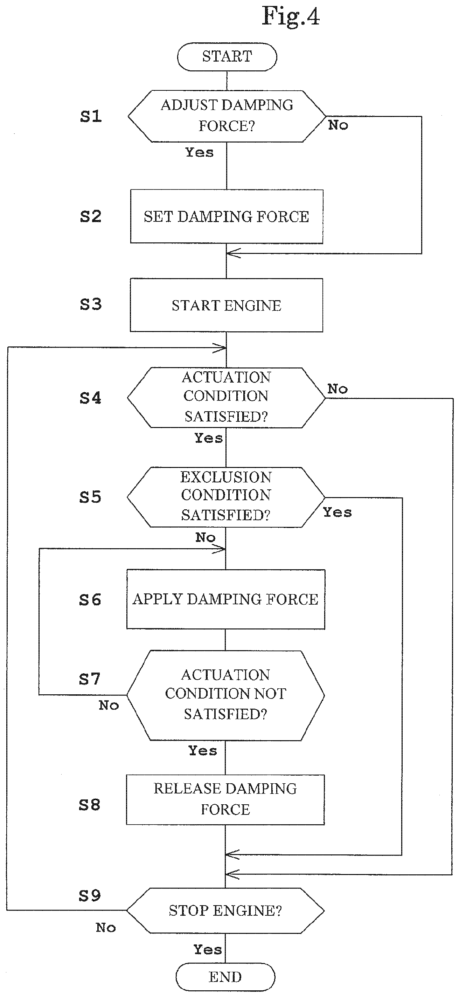

Motions of the straddled vehicle 1 described above is to be explained with reference to Fig. 4. Fig. 4 is a flow chart of motions of in the straddled vehicle according to the first embodiment.

### Step S1

A driver of the straddled vehicle 1 turns an ignition on. The driver branches a procedure based on whether the damping force of the driving force damping mechanism 53 is to be adjusted. If the driver does not adjust the damping force, the procedure proceeds to a step S3.

### Step S2

If the driver adjusts the damping force, the driver operates the setting unit 59. The driver extracts the damping force from the memory unit 71 and displays it on the meter 58 to confirm the damping force. The driver adjusts the damping force, displayed on the meter 58, to a desired value by operating the setting unit 59. The adjusted damping force is stored in the memory unit 71 through operation of the setting unit 59.

### Step S3

The driver starts the engine 31. The driver travels the straddled vehicle 1 after starting the engine 31. When the straddled vehicle 1 starts travelling, the ECU 70 starts to monitor constantly whether the actuation condition /or the exclusion condition is satisfied. Accordingly, since the ECU 70 does not operate unnecessarily at the time of stopping, a load of the ECU 70 can be suppressed and power consumption of the straddled vehicle 1 can be suppressed. When the straddled vehicle 1 stops, the ECU 70 stops monitoring whether the actuation condition and/or the exclusion condition is satisfied. For example, the ECU 70 starts to monitor the actuation condition and the exclusion condition at the time when the front wheel braking device 25 and the rear wheel braking device 48 are released, the number of rotations of the engine 31 is higher than the number of rotations of idling, and the pulse sensor 30 detects a pulse.

The ECU 70 start to monitor whether the actuation condition and/or the exclusion condition is satisfied after the straddled vehicle 1 starts travelling. Accordingly, when the straddled vehicle 1 is at rest, the actuation condition is not to be satisfied even when the rear wheel 46 runs on idle. Idling motion of the rear wheel 46 under such a rest state is intentionally performed by the driver. Then, the driver's intentional action is allowable by applying no damping force in such an idling motion.

Here, monitoring of whether the actuation condition and the exclusion condition are satisfied may be performed at the time when the ignition of the straddled vehicle 1 is turned on. Thereby, appropriate handling may be performed if the driver is inexperienced in skill, for example, and the driver unintentionally causes an idling motion in a rest state.

### Step S4

The procedure is branched based on whether any one of the actuation conditions described above is satisfied. Specifically, the ECU 70 branches the procedure based on whether the actuation condition is satisfied. If the actuation condition is not satisfied, the procedure proceeds to a step S9.

### Step S5

The procedure is branched based on whether any one of the exclusion conditions described above is satisfied. The ECU 70 branches the procedure based on whether the exclusion condition is satisfied even if the actuation condition is satisfied. If the exclusion condition is satisfied, the procedure is branched to the step S9. That is, no damping force is applied through operation of the driving force damping mechanism 53.

### Step S6

The damping force is applied. Specifically, the ECU 70 operates the driving force damping mechanism 53 to apply the damping force. Thereby, the caliper 51 operates to suppress rotation of the driven sprocket 47.

Specifically, the driving force can be damped before the rear wheel 46 runs on idle when the actuation condition is the acceleration motion. In other words, idling can be prevented by prior motion. Consequently, acceleration can be made under a state where the posture of the straddled vehicle 1 is stable. As a result, the straddled vehicle 1 accelerates appropriately.

When the actuation condition is the deceleration motion, inertia of the flywheel 34 of the engine 31 causes resistance to reduction in number of rotations of the engine 31. However, the transmitted driving force can be weakened by the driving force damping mechanism 53. As a result, the straddled vehicle 1 can decelerate appropriately.

If the actuation condition is the idling motion, the idling motion of the rear wheel 46 can be eliminated even when the rear wheel 46 runs on idle. In other words, continuous idling can be prevented by subsequent motion. As a result, the straddled vehicle 1 can accelerate in a stable state.

### Step S7

The processing is branched in accordance with whether a moving motion is not detected. The ECU 70 monitors constantly whether the actuation condition is satisfied. When the ECU 70 determines that the actuation condition is satisfied, the procedure returns to the step S6 and the damping force is continuously applied. On the other hand, when the ECU 70 determines that the actuation condition is not satisfied, the procedure is branched to a step S8.

### Step S8

The damping force is released. When the ECU 70 determines that the exclusion condition is satisfied, the damping force applied through operation of the driving force damping mechanism 53 is released. The ECU 70 makes the damping force, outputted from the driving force damping mechanism 53, zero.

When the actuation of the driving force damping mechanism 53 is released, the driving force damping mechanism 53 returns a damping force relative to a driving force to its original in a transmission path. Specifically, when the actuation of the driving force damping mechanism 53 is released, the damping force of the driving force damping mechanism 53 is eliminated and the driving force applied to the rear wheel 46 is recovered. Here, the damping force of the driving force damping mechanism 53 rapidly decreases immediately after the actuation of the driving force damping mechanism 53 is released. Therefore, the driving force that the rear wheel 46 receives increases rapidly immediately after the actuation of the driving force damping mechanism 53 is released. Accordingly, compared to a traction control to adjust the driving force of the engine 31, time is shorter until the vehicle speed recovers after the actuation of the driving force damping mechanism 53 is eliminated.

### Step S9

The procedure is branched in accordance with the motion status of the engine 31. When the engine 31 stops, the ECU 70 stops monitoring the actuation condition and the exclusion condition. On the other hand, when the engine 31 actuates, the procedure is branched to a step S4. That is, the ECU 70 continuously monitors the actuation condition and the exclusion condition constantly.

According to the first embodiment, the ECU 70 actuates the driving force damping mechanism 53 when the actuation condition is satisfied by detecting any of the acceleration motion, the deceleration motion, and the idling motion, and the exclusion condition is not satisfied. Accordingly, the driving force transmitted from the engine 31 to the rear wheel 46 is damped. Accordingly, rapid change in the driving force transmitted from the engine 31 to the rear wheel 46 during acceleration is relieved. As a result, the straddled vehicle 1 accelerates appropriately. Moreover, the straddled vehicle 1 decelerates appropriately if there is resistance to reduction in number of rotations of the engine 31 during deceleration.

With the present first embodiment, the driving force damping mechanism 53 can be constructed easily that suppresses the rotation of the driven sprocket 47. The rear wheel 46 includes the driven sprocket 47. The driving force damping mechanism 53 damps the driving force with the driven sprocket 47. Accordingly, the driving force damping mechanism 53 damps the driving force at a position near the rear wheel 46. Therefore, it is easy to adjust the driving force that the rear wheel 46 receives.

### Second embodiment

The following describes a second embodiment of the present invention with reference to the drawings.

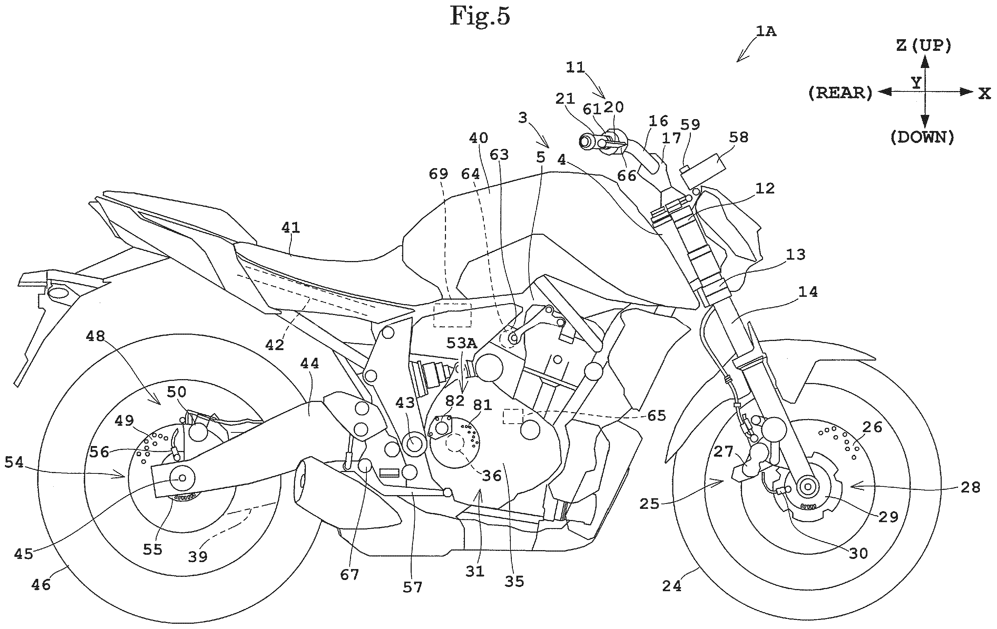

Fig. 5 is a right side view of a straddled vehicle according to the second embodiment. Like numerals are used to identify like components which are the same as that in the first embodiment mentioned above, and the components will not particularly be described.

A straddled vehicle 1A according to the second embodiment has a different construction of a driving force damping mechanism 53A.

The driving force damping mechanism 53A is provided on the engine 31. The driving force damping mechanism 53A is provided rightward of the engine 31 in the transverse direction Y.

The driving force damping mechanism 53A includes a disc 81 and a caliper 82. The disc 81 is attached to an end of a drive shaft 36. The disc 81 is located on the right side of the drive shaft 36 in the transverse direction Y. The caliper 82 is arranged across the disc 81 in the transverse direction Y. The caliper 82 is fixed to the engine 31. In Fig. 5, the disc 81 and the caliper 82 are denoted by solid lines for the convenience of illustration. The disc 81 and the caliper 82 are covered with a case not shown. The disc 81 and the caliper 82 are invisible in side view.

When the actuation conditions and the exclusion condition are monitored constantly, and then any actuation condition is satisfied and any exclusion condition does not meet, the ECU 70 operates the driving force damping mechanism 53A to apply a damping force to the drive shaft 36.

The present second embodiment produces the same effect as that of the first embodiment described above. Moreover, according to the present second embodiment, the engine 31 includes the drive shaft 36. The driving force damping mechanism 53A damps the driving force in the drive shaft 36. Accordingly, the driving force damping mechanism 53A damps the driving force at a position near the engine 31. Therefore, the driving force can be damped certainly. Moreover, sufficient responsibility until the driving force is damped can be obtained.

Here, the driving force damping mechanism 53A may be provided leftward of the straddled vehicle 1A in the transverse direction Y. In this case, it is preferred that the driving force damping mechanism 53A is located outward of the drive sprocket 38. With such a construction, it is preferred that a partition plate is arranged between the drive sprocket 38 and the chain 39 and the disc 81 for preventing attachment of a chain lube oil scattering from the drive sprocket 38 and the chain 39 to the disc 81.

Here, a correspondence of the construction between the above embodiments 1 and 2 and the present invention is as under.

The accel grip 21 corresponds to the "accelerator" in the present invention. The brake lever 20, the brake pedal 57, the front wheel braking device 25, and the rear wheel braking device 48 correspond to the "brake mechanism" in the present invention. The accel opening degree sensor 61, the throttle-valve opening degree sensor 64, the gear position sensor 65, the front braking detector 66, the rear braking detector 67, the front wheel ABS sensor 28, the rear wheel ABS sensor 54, the crankshaft position sensor 68, and the IMU 72 correspond to the "detector" in the present invention. The ECU 70 corresponds to the "controller" in the present invention. The acceleration motion corresponds to the "first motion" in the present invention. The deceleration motion corresponds to the "second motion" in the present invention. The driving force damping mechanism 53 corresponds to the "driven sprocket rotation suppressing mechanism" in the present invention. The driving force damping mechanism 53A corresponds to the "drive shaft rotation suppressing mechanism" in the present invention. The rear wheel braking device 48 corresponds to the "rear wheel brake" in the present invention. The flywheel 34 corresponds to the "inertia force applying member" in the present invention.

The present invention is not limited to the foregoing examples, but may be modified as follows.

(1) In the first and second embodiments described above, when the exclusion condition is satisfied, the damping force is not applied even if the actuation condition is satisfied. However, such a configuration is not essential in the present invention. That is, such a construction is adoptable that the damping force is necessarily applied if the actuation condition is satisfied. This results in no need for the ECU 70 to determine the exclusion condition. Accordingly, a load of the ECU 70 can be reduced.
(2) In the first and second embodiments described above, description is made taking examples of the driving force damping mechanism 53 that damps the driving force in the driven sprocket 47 and the driving force damping mechanism 53A that damps the driving force in the drive shaft 36. However, the present invention is not limitative to these constructions.

For example, the rear wheel braking device 48 may be adopted for the driving force damping mechanism 53B. That is, the rear wheel braking device 48 damps the driving force of the rear wheel 46 when the ECU 70 detects the actuation condition. The rear wheel braking device 48 normally provided is also used as the driving force damping mechanism. As a result, the number of parts does not increase and thus a weight does not increase. Moreover, cost can be suppressed.

The ECU 70 operates the driving force damping mechanism 53B only when the actuation condition is satisfied. When the exclusion condition is satisfied, the ECU 70 does not operate the driving force damping mechanism 53B even if the actuation condition is satisfied.

(3) In addition to the first and second embodiments and the modification (2) described above, the crankshaft position sensor 68 may be adopted for the driving force damping mechanism, for example. That is, the damping force is applied to the pickup rotor of the crankshaft position sensor 68. The driving force damping mechanism may be configured with a pickup rotor rotation suppressing mechanism having such a construction as above. Accordingly, the driving force outputted from the engine 31 is damped while a rotation force of the crankshaft 33 is suppressed.
(4) In the first and second embodiments described above, the engine 31 includes the flywheel 34 corresponding to the inertia force applying member. However, the present invention is not limitative to the engine 31 having such an aspect. The present invention is applicable to an engine 31 having no flywheel 34, for example. Such an engine 31 generates a large change rate of the number of rotations at the time of acceleration motion is particularly suitable to the present invention. The inertia force applying member is not limited to the flywheel 34. For example, the flywheel 34 is not necessary as long as a construction increases crank mass that applies the inertia force to the crankshaft 33.
(5) In the first and second embodiments described above, the driving force damping mechanism 53 actuates in both the acceleration motion and the deceleration motion. However, the present invention is not limited to such an embodiment.

For example, such is adoptable that the driving force damping mechanism 53 does not actuate in the deceleration motion but actuates in the acceleration motion. For example, such is adoptable that the driving force damping mechanism 53 does not actuate in the acceleration motion but actuates in the deceleration motion.

Moreover, it is not necessary to actuate the driving force damping mechanism 53 in the idling motion. That is because the idling motion can be prevented in advance by actuating the driving force damping mechanism 53 in the acceleration motion. However, the rear wheel 46 may cause idling motion without acceleration motion depending on road surface conditions. When the idling motion occurs, the posture of the straddled vehicle 1 may vary largely. In this case, it is preferred to actuate the driving force damping mechanism 53 by detecting either the acceleration motion or the idling motion.

(6) In the first and second embodiments and the modifications described above, such a construction is cited that the damping force is applied to the driven sprocket 47, the drive shaft 36, and the crankshaft 33. However, the present invention is not limited to such an embodiment. That is, there only needs to damp the driving force transmitted in a transmission path from the crankshaft 33 to the rear wheel 46. For example, such a construction is adoptable to apply resistance to the chain 39. Specifically, a chain movement suppressing mechanism is adoptable that sandwiches the chain 39, between the drive shaft 33 and the driven sprocket 47, in the transverse direction Y for preventing movement of the chain 39.
(7) In the first and second embodiment described above, the setting unit 59 is configured to adjust the damping force. However, in a not claimed further example, the damping force is not necessarily adjusted, for example.
(8) In the first and second embodiments described above, the straddled vehicles 1, 1A in which the driving force is transmitted to the rear wheel 46 via the chain 39 have been described as one example. However, the present invention is not limitative to drive of the chain 39. For example, the present invention is applicable to a straddled vehicle in which the driving force is transmitted to the rear wheel 46 in a shaft drive system. With such a construction, a mechanism for suppressing rotation of the shaft drive may be adopted.
(9) In the first and second embodiments described above, the straddled vehicle 1 is a street type straddled vehicle. However, the present invention is not limitative to the street-type straddled vehicle. For example, the present invention is applicable to such a straddled vehicle suitable for off-road or all terrain straddled vehicle that can travel on various terrains including rough terrains.
(10) In the first and second embodiments described above, the straddled vehicle provided with the accel opening degree sensor 61 has been described as one example. However, the present invention is not limited to the straddled vehicle 1 having such an aspect. That is, the present invention is applicable to a straddled vehicle 1 in which the accel grip 21 and the throttle valve are connected with a wire and which is not provided with the accel opening degree sensor 61. In this case, the function of the accel opening degree sensor 61 may be substituted by the throttle-valve opening degree sensor 64.
(11) In the first and second embodiments described above, the straddled vehicle 1 provided with the front wheel ABS sensor 28 and the rear wheel ABS sensor 54 has been described as one example. However, the present invention is not limited to the straddled vehicle 1 having such an aspect. That is, the present invention is applicable to a straddled vehicle 1 not including the front wheel ABS sensor 28 and the rear wheel ABS sensor 54. In this case, the ECU 70 detects only the actuation condition of the acceleration motion and the deceleration motion.
(12) In the first and second embodiments described above, the straddled vehicle 1 provided with the IMU 72 has been described as one example. However, the present invention is not limited to the straddled vehicle 1 having such an aspect. That is, the present invention is applicable to a straddled vehicle 1 not including the IMU 72.

### Reference Signs List

- 1, 1A: straddled vehicle
- 21: accel grip
- 25: front wheel braking device
- 28: front wheel ABS sensor
- 33: crankshaft
- 34: flywheel
- 35: transmission
- 36: drive shaft
- 38: drive sprocket
- 39: chain
- 46: rear wheel
- 47: driven sprocket
- 48: rear wheel braking device
- 53, 53A, 53B: driving force damping mechanism
- 54: rear wheel ABS sensor
- 58: meter
- 59: setting unit
- 61: accel opening degree sensor
- 64: throttle-valve opening degree sensor
- 65: gear position sensor
- 66: front braking detector
- 67: rear braking detector
- 68: crankshaft position sensor
- 69: electronic unit
- 70: ECU
- 71: memory unit
- 72: IMU
- 81: disc
- 82: caliper

## Claims

1. A straddled vehicle (1), comprising:
an engine (31) having a crankshaft (33) configured to output a driving force and a drive shaft (36) configured to rotate with the crankshaft (33);
a rear wheel (46) configured to rotate with the drive shaft (36);
an accelerator (21) configured to be operated by a rider for accelerating the straddled vehicle (1);
a brake mechanism (20, 25, 48, 57) configured to be operated by the rider for decelerating the straddled vehicle (1);
a driving force damping mechanism (53) configured to apply a damping force for damping the driving force transmitted in a transmission path from the crankshaft (33) to the rear wheel (46);
a detector (28, 54, 61, 64, 65, 66, 67, 68, 72) configured to detect at least either a first motion for accelerating the straddled vehicle (1) or a second motion for decelerating the straddled vehicle; and
a controller (70) configured to actuate the driving force damping mechanism when the detector (28, 54, 61, 64, 65, 66, 67, 68, 72) detects at least either the first motion or the second motion,
**characterized by** further comprising
a memory unit (71) configured to store the damping force; and
a setting unit (59) configured to control the damping force stored in the memory unit (71) in such a way that the damping force is adjustable by operating the setting unit (59) by the rider.

2. The straddled vehicle (1) according to claim 1, wherein
the controller (70) does not actuate the driving force damping mechanism (53) when a transmission ratio in the transmission (35) of the engine (31) is lower than a predetermined transmission ratio even when the detector (28, 54, 61, 64, 65, 66, 67, 68, 72) detects the first motion.

3. The straddled vehicle (1) according to claim 1, wherein
the controller (70) does not actuate the driving force damping mechanism (53) when an amount of change in degree of opening of the accelerator (21) per time is smaller than a predetermined value even when the detector (28, 54, 61, 64, 65, 66, 67, 68, 72) detects the first motion.

4. The straddled vehicle (1) according to claim 1, wherein
the controller (70) does not actuate the driving force damping mechanism (53) when a rate of increase in number of rotations of the engine (31) is equal to or less than a predetermined value even when the detector (28, 54, 61, 64, 65, 66, 67, 68, 72) detects the first motion

5. The straddled vehicle (1) according to claim 1, wherein
the controller (70) does not actuate the driving force damping mechanism (53) when an amount of operation of the brake mechanism (20,25,48,57) by the rider is smaller than a predetermined value even when the detector (28, 54, 61, 64, 65, 66, 67, 68, 72) detects the second motion

6. The straddled vehicle (1) according to claim 1, wherein
the controller (70) does not actuate the driving force damping mechanism (53) when the accelerator (21) is operated so as not to decelerate even when the detector (28, 54, 61, 64, 65, 66, 67, 68, 72) detects the second motion.

7. The straddled vehicle (1) according to claim 1, wherein
the detector (28, 54, 61, 64, 65, 66, 67, 68, 72) detects upward movement of a rear part of the vehicle as the first motion.

8. The straddled vehicle (1) according to claim 1, wherein
the detector (28, 54, 61, 64, 65, 66, 67, 68, 72) detects downward movement of a front part of the vehicle as the second motion.

9. The straddled vehicle (1) according to claim 1, wherein
the detector (28, 54, 61, 64, 65, 66, 67, 68, 72) detects an idling action that the rear wheel (46) runs on idle, and
the controller (70) actuates the driving force damping mechanism (53) when the detector (28, 54, 61, 64, 65, 66, 67, 68, 72) detects the idling action.

10. The straddled vehicle (1) according to any one of claims 1 to 9, wherein
after the driving force damping mechanism (53) actuates, the controller (70) releases actuation of the driving force damping mechanism (53) when at least either the first motion or the second motion is not detected.

11. The straddled vehicle (1) according to any one of claims 1 to 9, wherein
the rear wheel (46) includes a driven sprocket (47) configured to rotate by receiving the driving force from the drive shaft (36), and
the driving force damping mechanism (53) is a driven sprocket rotation suppressing mechanism provided on the driven sprocket (47) and configured to suppress rotation of the driven sprocket (47).

12. The straddled vehicle (1) according to any one of claims 1 to 9, wherein
the driving force damping mechanism (53) is a drive shaft rotation suppressing mechanism provided on the drive shaft (36) and configured to suppress rotation of the drive shaft (36).

13. The straddled vehicle (1) according to any one of claims 1 to 9, wherein
the brake mechanism (20, 25, 48, 57) includes a rear wheel brake (48) configured to brake the rear wheel (46), and
the driving force damping mechanism (53) corresponds to the rear wheel brake (48).

14. The straddled vehicle (1) according to any one of claims 1 to 9, wherein
the engine (31) does not include an inertia force applying member (34) configured to apply an inertia force to the crankshaft (33).

## Patentansprüche

1. Grätschsitz-Fahrzeug (1), mit:
einem Motor (31) mit einer Kurbelwelle (33), die ausgebildet ist, eine Antriebskraft abzugeben, und mit einer Antriebswelle (36), die ausgebildet ist, sich mit der Kurbelwelle zu drehen (33);
einem Hinterrad (46), das ausgebildet ist, sich mit der Antriebswelle (36) zu drehen;
einen Beschleunigungsgeber (21), der ausgebildet ist, von einem Fahrer betätigt zu werden, um das Grätschsitz-Fahrzeug (1) zu beschleunigen;
einem Bremsmechanismus (20, 25, 48, 57), der ausgebildet ist, von dem Fahrer betätigt zu werden, um das Grätschsitz-Fahrzeug (1) abzubremsen;
einem Antriebskraftdämpfungsmechanismus (53), der ausgebildet ist, eine Dämpfungskraft zum Dämpfen der Antriebskraft, die in einem Übertragungsweg von der Kurbelwelle (33) zu dem Hinterrad (46) übertragen wird, auszuüben;
einem Detektor (28, 54, 61, 64, 65, 66, 67, 68, 72), der ausgebildet ist, mindestens entweder eine erste Bewegung zum Beschleunigen des Grätschsitz-Fahrzeugs (1) oder eine zweite Bewegung zum Abbremsen des Grätschsitz-Fahrzeugs zu erfassen; und
einer Steuereinheit (70), die ausgebildet ist, den Antriebskraftdämpfungsmechanismus zu betätigt, wenn der Detektor (28, 54, 61, 64, 65, 66, 67, 68, 72) mindestens entweder die erste Bewegung oder die zweite Bewegung erfasst,
**gekennzeichnet durch**
eine Speichereinheit (71), die ausgebildet ist, die Dämpfungskraft zu speichern; und
eine Einstelleinheit (59), die ausgebildet ist, die in der Speichereinheit (71) gespeicherte Dämpfungskraft so zu steuern, dass die Dämpfungskraft durch Betätigen der Einstelleinheit (59) durch den Fahrer einstellbar ist.

2. Grätschsitz-Fahrzeug (1) gemäß Anspruch 1, wobei
die Steuereinheit (70) den Antriebskraftdämpfungsmechanismus (53) nicht betätigt, wenn ein Übersetzungsverhältnis in dem Getriebe (35) des Motors (31) niedriger als ein vorgegebenes Übersetzungsverhältnis ist, selbst wenn der Detektor (28, 54, 61, 64, 65, 66, 67, 68, 72) die erste Bewegung erfasst.

3. Grätschsitz-Fahrzeug (1) gemäß Anspruch 1, wobei
die Steuereinheit (70) den Antriebskraftdämpfungsmechanismus (553) nicht betätigt, wenn eine pro Zeiteinheit auftretende Änderung eines Öffnungsgrades des Beschleunigungsgebers (21) geringer ist als ein vorbestimmter Wert ist, selbst wenn der Detektor (28, 54, 61, 64, 65, 66, 67, 68, 72) die erste Bewegung erfasst.

4. Grätschsitz-Fahrzeug (1) gemäß Anspruch 1, wobei
die Steuereinheit (70) den Antriebskraftdämpfungsmechanismus (53) nicht betätigt, wenn eine Steigerungsrate der Drehzahl des Motors (31) gleich oder kleiner als ein vorgegebener Wert ist, selbst wenn der Detektor (28, 54, 61, 64, 65, 66, 67, 68, 72) die erste Bewegung erfasst.

5. Grätschsitz-Fahrzeug (1) gemäß Anspruch 1, wobei
die Steuereinheit (70) den Antriebskraftdämpfungsmechanismus (53) nicht betätigt, wenn ein Grad an Betätigung des Bremsmechanismus (20, 25, 48, 57) durch den Fahrer kleiner als ein vorbestimmter Wert ist, selbst wenn der Detektor (28, 54, 61, 64, 65, 66, 67, 68, 72) die zweite Bewegung erfasst.

6. Grätschsitz-Fahrzeug (1) gemäß Anspruch 1, wobei
die Steuereinheit (70) den Antriebskraftdämpfungsmechanismus (53) nicht betätigt, wenn der Beschleunigungsgeber (21) so betätigt wird, dass keine Verzögerung erfolgt, selbst wenn der Detektor (28, 54, 61, 64, 65, 66, 67, 68, 72) die zweite Bewegung erfasst.

7. Grätschsitz-Fahrzeug (1) gemäß Anspruch 1, wobei
der Detektor (28, 54, 61, 64, 65, 66, 67, 68, 72) eine Aufwärtsbewegung eines hinteren Teils des Fahrzeugs als die erste Bewegung erfasst.

8. Grätschsitz-Fahrzeug (1) gemäß Anspruch 1, wobei
der Detektor (28, 54, 61, 64, 65, 66, 67, 68, 72) eine Abwärtsbewegung eines vorderen Teils des Fahrzeugs als die zweite Bewegung erfasst.

9. Grätschsitz-Fahrzeug (1) gemäß Anspruch 1, wobei
der Detektor (28, 54, 61, 64, 65, 66, 67, 68, 72) eine Leerlaufaktion erfasst, bei der das hintere Rad (46) im Leerlauf läuft, und
die Steuereinheit (70) den Antriebskraftdämpfungsmechanismus (53) betätigt, wenn der Detektor (28, 54, 61, 64, 65, 66, 67, 68, 72) die Leerlaufaktion erfasst.

10. Grätschsitz-Fahrzeug (1) gemäß einem der Ansprüche 1 bis 9, wobei nach dem Auslösen des Antriebskraftdämpfungsmechanismus (53) die Steuereinheit (70) die Betätigung des Antriebskraftdämpfungsmechanismus (53) aufhebt, wenn mindestens entweder die erste Bewegung oder die zweite Bewegung nicht erfasst wird.

11. Grätschsitz-Fahrzeug (1) gemäß einem der Ansprüche 1 bis 9, wobei
das Hinterrad (46) ein angetriebenes Kettenrad (47) aufweist, das ausgebildet ist, sich zu drehen, indem es die Antriebskraft von der Antriebswelle (36) aufnimmt, und
der Antriebskraftdämpfungsmechanismus (53) ein Mechanismus zur Unterdrückung der Drehung des angetriebenen Kettenrads ist, der an dem angetriebenen Kettenrad (47) vorgesehen und ausgebildet ist, die Drehung des angetriebenen Kettenrads (47) zu unterdrücken.

12. Grätschsitz-Fahrzeug (1) gemäß einem der Ansprüche 1 bis 9, wobei
der Antriebskraftdämpfungsmechanismus (5) ein Antriebswellenrotationsunterdrückungsmechanismus ist, der an der Antriebswelle (36) vorgesehen und ausgebildet ist, die Drehung der Antriebswelle (36) zu unterdrücken.

13. Grätschsitz-Fahrzeug (1) nach einem der Ansprüche 1 bis 9, wobei
der Bremsmechanismus (20, 25, 48, 57) eine Hinterradbremse (48) aufweist, die ausgebildet ist, das Hinterrad (46) zu bremsen, und
der Antriebskraftdämpfungsmechanismus (53) der Hinterradbremse (48) entspricht.

14. Grätschsitz-Fahrzeug (1) gemäß einem der Ansprüche 1 bis 9, wobei
der Motor (31) kein Trägheitskraftausübungselement (34) umfasst, das ausgebildet ist, eine Trägheitskraft auf die Kurbelwelle (33) auszuüben.

## Revendications

1. Véhicule chevauché (1), comprenant :
un moteur (31) ayant un vilebrequin (33) configuré pour délivrer une force motrice et un arbre d'entraînement (36) configuré pour tourner avec le vilebrequin (33) ;
une roue arrière (46) configurée pour tourner avec l'arbre d'entraînement (36) ;
un accélérateur (21) configuré pour être actionné par un conducteur pour accélérer le véhicule chevauché (1) ;
un mécanisme de freinage (20, 25, 48, 57) configuré pour être actionné par le conducteur pour décélérer le véhicule chevauché (1) ;
un mécanisme d'amortissement de la force motrice (53) configuré pour appliquer une force d'amortissement pour amortir la force motrice transmise dans un chemin de transmission du vilebrequin (33) à la roue arrière (46) ;
un détecteur (28, 54, 61, 64, 65, 66, 67, 68, 72) configuré pour détecter au moins soit un premier mouvement d'accélération du véhicule chevauché (1), soit un deuxième mouvement de décélération du véhicule chevauché ; et
un contrôleur (70) configuré pour actionner le mécanisme d'amortissement de la force motrice lorsque le détecteur (28, 54, 61, 64, 65, 66, 67, 68, 72) détecte au moins soit le premier mouvement, soit le deuxième mouvement,
caractérisé en comprenant en outre une unité de mémoire (71) configurée pour stocker la force d'amortissement ; et
une unité de réglage (59) configurée pour commander la force d'amortissement stockée dans l'unité de mémoire (71) de manière que la force d'amortissement est réglable en actionnant l'unité de réglage (59) par le conducteur.

2. Véhicule chevauché (1) selon la revendication 1, dans lequel
le contrôleur (70) n'actionne pas le mécanisme d'amortissement de la force motrice (53) lorsqu'un rapport de transmission dans la transmission (35) du moteur (31) est inférieur à un rapport de transmission prédéterminé même lorsque le détecteur (28, 54, 61, 64, 65, 66, 67, 68, 72) détecte le premier mouvement.

3. Véhicule chevauché (1) selon la revendication 1, dans lequel
le contrôleur (70) n'actionne pas le mécanisme d'amortissement de la force motrice (53) lorsqu'une quantité de changement de degré d'ouverture de l'accélérateur (21) par temps est inférieure à une valeur prédéterminée même lorsque le détecteur (28, 54, 61, 64, 65, 66, 67, 68, 72) détecte le premier mouvement.

4. Véhicule chevauché (1) selon la revendication 1, dans lequel
le contrôleur (70) n'actionne pas le mécanisme d'amortissement de la force motrice (53) lorsqu'un taux d'augmentation du nombre de rotations du moteur (31) est égal ou inférieur à une valeur prédéterminée même lorsque le détecteur (28, 54, 61, 64, 65, 66, 67, 68, 72) détecte le premier mouvement.

5. Véhicule chevauché (1) selon la revendication 1, dans lequel
le contrôleur (70) n'actionne pas le mécanisme d'amortissement de la force motrice (53) lorsqu'une quantité d'opération du mécanisme de freinage (20, 25, 48, 57) par le conducteur est inférieure à une valeur prédéterminée même lorsque le détecteur (28, 54, 61, 64, 65, 66, 67, 68, 72) détecte le deuxième mouvement.

6. Véhicule chevauché (1) selon la revendication 1, dans lequel
le contrôleur (70) n'actionne pas le mécanisme d'amortissement de la force motrice (53) lorsque l'accélérateur (21) est actionné de manière à ne pas décélérer même lorsque le détecteur (28, 54, 61, 64, 65, 66, 67, 68, 72) détecte le deuxième mouvement.

7. Véhicule chevauché (1) selon la revendication 1, dans lequel
le détecteur (28, 54, 61, 64, 65, 66, 67, 68, 72) détecte le mouvement vers le haut d'une partie arrière du véhicule comme premier mouvement.

8. Véhicule chevauché (1) selon la revendication 1, dans lequel
le détecteur (28, 54, 61, 64, 65, 66, 67, 68, 72) détecte le mouvement vers le bas d'une partie avant du véhicule en tant que deuxième mouvement.

9. Véhicule chevauché (1) selon la revendication 1, dans lequel
le détecteur (28, 54, 61, 64, 65, 66, 67, 68, 72) détecte une action de marche au ralenti de la roue arrière (46), et
le contrôleur (70) actionne le mécanisme d'amortissement de la force motrice (53) lorsque le détecteur (28, 54, 61, 64, 65, 66, 67, 68, 72) détecte l'action de marche au ralenti.

10. Véhicule chevauché (1) selon l'une quelconque des revendications 1 à 9,
dans lequel, après l'actionnement du mécanisme d'amortissement de la force motrice (53), le contrôleur (70) relâche l'actionnement du mécanisme d'amortissement de la force motrice (53) lorsqu'au moins le premier mouvement ou le deuxième mouvement n'est pas détecté.

11. Véhicule chevauché (1) selon l'une quelconque des revendications 1 à 9,
dans lequel la roue arrière (46) inclut un pignon entraîné (47) configuré pour tourner en recevant la force motrice de l'arbre d'entraînement (36), et
le mécanisme d'amortissement de la force motrice (53) est un mécanisme de suppression de la rotation du pignon entraîné prévu sur le pignon entraîné (47) et configuré pour supprimer la rotation du pignon entraîné (47).

12. Véhicule chevauché (1) selon l'une quelconque des revendications 1 à 9,
dans lequel le mécanisme d'amortissement de la force motrice (53) est un mécanisme de suppression de la rotation de l'arbre d'entraînement prévu sur l'arbre d'entraînement (36) et configuré pour supprimer la rotation de l'arbre d'entraînement (36).

13. Véhicule chevauché (1) selon l'une quelconque des revendications 1 à 9,
dans lequel le mécanisme de freinage (20, 25, 48, 57) inclut un frein de roue arrière (48) configuré pour freiner la roue arrière (46), et
le mécanisme d'amortissement de la force motrice (53) correspond au frein de roue arrière (48).

14. Véhicule chevauché (1) selon l'une quelconque des revendications 1 à 9, dans lequel
le moteur (31) n'inclut pas d'organe d'application d'une force d'inertie (34) configuré pour appliquer une force d'inertie au vilebrequin (33).
